# FASCICULE DE BREVET EUROPEEN

(11) **EP 3 709 822 B1**
(45) Date de publication et mention de la délivrance du brevet: **27.03.2024**
(21) Numéro de dépôt: 18799796.0
(22) Date de dépôt: 15.11.2018
(51) Int. Cl.: A23L 3/3418, A23B 7/148, A23B 9/20

(54) **PROCÉDÉ DE TRAITEMENT DE L'ATMOSPHÈRE D'UN STOCKAGE DE PRODUITS VÉGÉTAUX À HAUTE HUMIDITÉ RELATIVE**
VERFAHREN ZUR BEHANDLUNG DER ATMOSPHÄRE IN EINEM RAUM ZUR LAGERUNG VON PFLANZENPRODUKTEN BEI HOHER RELATIVER FEUCHTIGKEIT
METHOD FOR TREATING THE ATMOSPHERE IN A SPACE USED TO STORE VEGETABLE PRODUCTS AT HIGH RELATIVE HUMIDITY

(30) Priorité: 15.11.2017 FR 1760756
(43) Date de publication de la demande: 23.09.2020
(73) Titulaire: Xeda International S.A., 13670 Saint Andiol (FR)
(72) Inventeur: SARDO, Alberto, 13160 Chateaurenard (FR)
(74) Mandataire: Lavoix
(86) Numéro de dépôt international: PCT/EP2018/081371
(87) Numéro de publication internationale: WO 2019/096906

(56) Documents cités:
- WO-A1-2015/199738
- WO-A1-2017/180849
- FR-A1- 2 181 080
- FR-A1- 2 441 812
- FR-A1- 3 040 637
- GB-A- 476 272
- US-A- 2 560 057
- Anonymous: "Effect of High Humidity and Water on... (PDF Download Available)", , 1 janvier 2006 (2006-01-01), XP055470771, Extrait de l'Internet: URL:https://www.researchgate.net/publicati on/265203385_Effect_of_High_Humidity_and_W ater_on_Storage_Life_and_Quality_of_Banana s [extrait le 2018-04-26]
- L Van ET AL: "APPLIED SCIENCE and ENGINEERING EFFECT OF RELATIVE HUMIDITY, TEMPERATURE AND LENGTH OF STORAGE ON DECAY AND QUALITY OF POTATOES AND ONIONS INTRODUCTION", , 1 janvier 1973 (1973-01-01), XP055470775, Extrait de l'Internet: URL:https://onlinelibrary.wiley.com/doi/pd f/10.1111/j.1365-2621.1973.tb02781.x [extrait le 2018-04-26]
- P J SHARKEY ET AL: "EFFECTS OF HIGH-HUMIDITY STORAGE ON QUALITY, DECAY AND STORAGE LIFE OF CHERRY, LEMON AND PEACH FRUITS", SCIENTIA, vol. 11, no. 23, 1 janvier 1984 (1984-01-01), XP055470776,
- L. Van Den Berg: "The Role of Humidity, Temperature, and Atmospheric Composition in Maintaining Vegetable Quality During Storage" In: "Quality of Selected Fruits and Vegetables of North America", 11 novembre 1981 (1981-11-11), AMERICAN CHEMICAL SOCIETY, WASHINGTON, D. C., XP055470782, ISBN: 978-0-8412-0846-9 vol. 170, pages 95-107, DOI: 10.1021/bk-1981-0170.ch008, abrégé pages 95,96 page 103 tableau VI

## Description

L'invention concerne en général la conservation des produits végétaux stockés dans des chambres de grand volume. L'invention est définie par les revendications.

Il est nécessaire de maîtriser un grand nombre de paramètres pour contrôler le processus de maturation des produits végétaux stockés.

La respiration des produits végétaux conservés dépend de la variété végétale, de leur état de maturation, de la température de stockage et de la composition de l'atmosphère.

Lors de leur respiration, les produits végétaux absorbent l'oxygène et produisent du gaz carbonique et de l'eau. Typiquement, le métabolisme est ralenti ou inhibé par la réduction du taux d'oxygène dans l'atmosphère. Cependant, des taux d'oxygène très bas, généralement couplés avec des températures basses, sont nécessaires pour obtenir une réduction sensible de métabolisme, sans engendrer de fermentation.

Il est nécessaire généralement de maintenir un certain taux d'humidité dans l'atmosphère du stockage, pour éviter que les produits végétaux ne dessèchent, et présentent un aspect ridé. Ainsi, généralement, les produits végétaux sont stockés dans une atmosphère présentant une humidité relative (HR) comprise entre 90 et 95%, au plus. Cette limitation est due au fort impact de la condensation qui a nécessairement lieu dans les installations classiques, du fait de, notamment :
- le refroidissement des produits végétaux, qui ont à leur entrée une température supérieure à la température de stockage ;
- les parois de l'espace de stockage, en contact avec l'air extérieur, plus chaud ;
- la respiration des produits végétaux stockés, très exothermique, qui nécessite de refroidir l'espace de stockage et créé également de la condensation sur l échangeur . En pratique, les meilleures chambres froides utilisant des grandes surfaces d'échanges et l'eau glycolée comme liquide intermédiaire afin de réduire l'écart de température air/surface froide, peuvent maintenir à peine une HR de l'ordre de 95%.
De plus, plus la HR augmente, plus l'effet condensation augmente et plus il est difficile d'évaporer à température constante car l'air extrêmement chargé en humidité aura du mal à évaporer ultérieurement de l'eau.

Van den Berg, L. and C.P. Lentz, 1978, High-humidity storage of vegetables and fruits. HortScience 13:565-569 ont expérimenté le stockage des légumes avec une humidité relative jusqu'à 99%, avec un système d'air réfrigéré extérieur à l'espace de stockage. Néanmoins, les installations décrites ne permettent pas d'atteindre une humidité relative supérieure à 99%, du fait de la condensation qui se produit inévitablement sur les parois en raison de la différence de température entre l'air extérieur et intérieur.

FR 201658046 déposé le 30 août 2016 décrit des installations permettant d'humidifier l'atmosphère de stockage sans toutefois envisager des taux d'humidité relative à 99%.

Il a maintenant été découvert que la physiologie des produits végétaux stockés pouvait être inhibée en les stockant dans une atmosphère à très haute humidité relative, supérieure à 99%.

A cette fin, l'invention porte sur un procédé de conservation de produits végétaux tel que défini par la revendication 1, comprenant le stockage desdits produits dans une atmosphère dont l'humidité relative (HR) est égale ou supérieure à 99%, typiquement strictement supérieure à 99%, caractérisé en ce que l'atmosphère est humidifiée par de la vapeur d'eau à température ambiante jusqu'à saturation de l'air.

On entend par « humidité relative » (HR), le degré hygrométrique de l'air qui correspond au rapport de la pression partielle de la vapeur d'eau contenue dans l'air sur la pression de vapeur saturante (ou tension de vapeur) à la même température. Elle est donc une mesure du rapport entre le contenu en vapeur d'eau de l'air et sa capacité maximale à en contenir dans ces conditions.

Le procédé comprend au moins une étape de mise en contact de l'atmosphère avec un flux aqueux par circulation dans un garnissage.

Cette mise en contact est réalisée au sein de l'espace de stockage des produits végétaux.

Le procédé comprend une étape de mesure de l'humidité dans l'atmosphère du stockage, un débit de l'atmosphère à l'étape de mise en contact étant réglé en fonction de ladite température et/ou humidité mesurée. Typiquement, l'humidité relative peut être mesurée par un hygromètre.

A des taux élevés de HR, notamment supérieures à 99%, la mesure par un hygromètre n'est pas suffisamment précise pour déterminer des variations de HR qui peuvent substantiellement impacter le développement physiologique des produits végétaux.

Les inventeurs ont donc déterminé l'HR de façon indirecte, tout en permettant la précision nécessaire, en utilisant le principe de la réaction : sucre + O₂ → CO₂ + H₂O.

Soit, si v est le taux d'avancement de la réaction et HR l'humidité relative, v=(100-HR)/100.

Pour maintenir l'équilibre, plus la concentration en H₂O augmente et moins la réaction avance.

En mesurant la variation du CO₂ produit, il est donc possible d'apprécier et quantifier la variation du taux de HR de manière extrêmement fine et de vérifier l'impact de variations mêmes faibles sur le développement physiologique.

La production de CO₂ aux différentes conditions peut être déterminée très précisément :
- soit par lecture directe de la concentration dans l'atmosphère,
- soit en utilisant un produit absorbant (tel que la soude, la potasse ou l'hydroxyde de calcium) dans l'eau recirculée et en déterminant la quantité de CO₂ absorbée dans un certain temps dans les conditions expérimentales.

Il est également possible de déterminer le degré d'avancement de la réaction et donc le développement physiologique par la mesure de :
1) la mesure de la quantité de chaleur produite ;
2) la quantité de matière sèche perdue.

On entend par « phase aqueuse » ou « flux aqueux », un volume d'eau éventuellement en circulation dynamique comprenant majoritairement de l'eau, dans laquelle éventuellement, un ou plusieurs agents, tels que des agents actifs, additifs, etc., sont ajoutés.

La phase aqueuse ou flux aqueux a typiquement une température comprise entre 0 et 20°C.

Le taux de HR peut être ajusté grâce notamment à trois paramètres : le débit d'air, le débit d'eau et la surface de contact entre l'air et l'eau, qui doivent être dimensionnés en fonction de la quantité de produits végétaux stockés et l'espace de stockage.

Généralement, le débit horaire d'air est supérieur à ou égal à 25%du volume de stockage, pour assurer une humidification homogène.

Typiquement, le débit d'air (en kg/h) à humidifier est compris entre 20 et 10000% du poids de produits végétaux stockés.

Typiquement, le débit d'eau est supérieur ou égal à 10% du débit d'air (en kg/h).

Le procédé peut en outre présenter une ou plusieurs des caractéristiques ci-dessous, considérées individuellement ou selon toutes les combinaisons techniquement possibles :
- la température de stockage des produits végétaux est comprise entre -1 et 20°C, notamment entre 10 et 20°C ; avantageusement, il n'est plus nécessaire de refroidir l'atmosphère de stockage aux températures très basses qui sont nécessaires habituellement. En ralentissant le métabolisme des produits végétaux, le procédé selon l'invention permet d'accéder à des températures de stockage plus élevées : Il s'ensuit donc une amélioration des propriétés organoleptiques, ainsi qu'un gain énergétique ;
- le flux d'air est supérieur à 0,1 volume de la chambre de stockage horaire ; notamment compris entre 2000 et 10000 m³/h ;
- le flux aqueux est supérieur à 10% du flux d'air en poids (kg) ; notamment compris entre 500 et 200kg/h ;
- la phase aqueuse comprend au moins un produit biocide et/ou phytoprotecteur volatile, de température d'ébullition comprise entre 60 et 280°C, la phase aqueuse étant évaporée à l'étape de mise en contact à une température inférieure à 50°C ;
- l'étape de mise en contact vise à éliminer les poussières et les arômes de l'atmosphère ;
- la phase aqueuse contient au moins un additif, l'étape de mise en contact visant à éliminer le CO₂ et/ou l'éthylène de l'atmosphère ;
- le au moins un additif comprend un oxydant, par exemple du permanganate ou du bichromate ;
- le procédé comprend une étape de mesure de la concentration du produit biocide et/ou phytoprotecteur volatile dans l'atmosphère, un débit du flux de l'autre liquide à l'étape de mise en contact étant ajusté en fonction de ladite concentration mesurée ;
- le procédé comprend :
   - une étape de collecte du flux aqueux issu de l'étape de mise en contact ;
   - une étape de régénération du flux aqueux issu de l'étape de mise en contact, au cours de laquelle ledit flux aqueux est mis en contact avec un flux d'air extérieur au stockage par circulation dans un garnissage extérieur, le flux aqueux étant ensuite réutilisé à l'étape de mise en contact ;
- le procédé comprend une étape de mesure de la concentration en CO₂ et/ou O₂ dans l'atmosphère du stockage, un débit du flux aqueux étant réglé en fonction de ladite concentration mesurée ; et
- le procédé comprend une étape de mesure de la température dans l'atmosphère du stockage, un débit de l'atmosphère à l'étape de mise en contact étant réglé en fonction de ladite température mesurée ; et- le procédé comprend une étape de mesure de la température dans l'atmosphère du stockage, un débit du flux d'air extérieur à l'étape de régénération étant réglé au moins en fonction de ladite température mesurée.

Le procédé selon l'invention met en oeuvre un ensemble de traitement de l'atmosphère d'un stockage de produits végétaux, l'ensemble comprenant au moins :
- un dispositif de mise en contact de l'atmosphère avec un flux aqueux, comportant un garnissage ;
- un dispositif d'injection d'un flux aqueux dans le dispositif de mise en contact ;
- un dispositif de circulation de l'atmosphère du stockage dans le dispositif de mise en contact ;
le dispositif de mise en contact étant conformé pour que l'atmosphère soit mise en contact avec le flux aqueux par circulation dans le garnissage, et en ce que l'atmosphère présente un taux d'humidité relative supérieur à 99%.

Le procédé peut être avantageusement conduit avec l'ensemble de traitement décrit dans la demande FR1658046.

Selon un mode de réalisation, l'HR de l'atmosphère du stockage est supérieure à 99,5%.

Le procédé selon l'invention réduit le développement physiologique des produits végétaux en le ralentissant dans le temps, inhibant ainsi les phénomènes associés au vieillissement tels que l'échaudure des pomacées (pommes, poires, etc...), la germination des tubercules, la perte de poids de tout produit végétal. Avec une très haute HR, les végétaux sont donc mieux conservés et une plus grande proportion de ceux-ci sont donc aptes à la commercialisation au moment de l'ouverture du stockage. Les pertes par pourritures sont réduites. Le développement des maladies physiologiques entraînées par l'évolution des végétaux stockés est ralenti ou empêché. L'absence de produits sénescents favorise la conservation.

Sans être lié par la théorie, il a été découvert que l'inhibition du métabolisme des produits végétaux stockés augmente de façon non linéaire avec le taux d'humidité relative de l'atmosphère de stockage. Ainsi, selon un mode de réalisation, le procédé selon l'invention inhibe le développement physiologique des produits végétaux de sorte que lorsqu'il est rapporté à une valeur de référence 1 à 95% d'humidité relative de l'atmosphère du stockage, le blocage de développement varie de la manière suivante :
5 à 99% d'humidité relative, 10 à 99,5% d'HR, 50 à 99,9% d'HR, 100 à 99,95% d'HR, 500 à 99,99% d'HR.

L'ensemble de l'invention peut en outre présenter une ou plusieurs des caractéristiques ci-dessous, considérées individuellement ou selon toutes les combinaisons techniquement possibles :
- le dispositif de mise en contact comporte une réserve et une dose de phase aqueuse stockée dans la réserve ;
- la phase aqueuse peut comprendre au moins un produit biocide et/ou phytoprotecteur volatile, de température d'ébullition comprise entre 60 et 280°C, la phase aqueuse étant évaporée dans le dispositif de mise en contact à une température inférieure à 50°C ;
- le dispositif de mise en contact est configuré pour éliminer les poussières et les arômes de l'atmosphère ;
- la phase aqueuse contient au moins un additif, le dispositif de de mise en contact étant configuré pour éliminer le CO₂ et/ou l'éthylène de l'atmosphère ;
- l'ensemble comprend un dispositif de régénération du flux aqueux, avec :
   - un dispositif extérieur de mise en contact, comportant un garnissage extérieur ;
   - un dispositif d'injection du flux aqueux provenant du dispositif de mise en contact dans le dispositif extérieur de mise en contact ;
   - un dispositif de circulation d'un flux extérieur au stockage (3) dans le dispositif extérieur de mise en contact ; et
      le dispositif extérieur de mise en contact étant conformé pour que le flux aqueux soit mis en contact avec un flux d'air extérieur au stockage par circulation dans le garnissage extérieur, puis recyclé dans le dispositif de mise en contact.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un premier mode de réalisation de l'invention ;
- la figure 2 est une représentation schématique simplifiée d'un second mode de réalisation de l'invention ;

Le stockage est une enceinte fermée, au sens où les échanges entre l'atmosphère du stockage et l'extérieur, notamment les échanges gazeux sont très réduits, de manière à ne pas mettre en péril la conservation des produits végétaux.

Les produits végétaux sont typiquement des légumes, fruits, tubercules, grains, fleurs ou semis, qui sont conservés après récolte et avant expédition vers les détaillants.

L'ensemble 1 illustré sur les figures, et le procédé correspondant, est destiné au traitement de l'atmosphère d'un stockage 3 de produits végétaux 5 ayant avantageusement un volume supérieur à 200 m³. Selon un mode de réalisation, le volume du stockage est typiquement supérieur à 200 m³, de préférence supérieur à 500 m³ et encore de préférence supérieur à 1000 m³. Ainsi, l'ensemble et le procédé peuvent être typiquement destinés à être appliqués à des stockages de grand volume, par exemple une chambre, un silo, une serre ou tout autre local destiné au stockage de produits végétaux.

Selon un autre mode de réalisation non revendiqué, l'ensemble et le procédé de stockage peuvent également être destinés à être appliqués à des volumes plus faibles tels que les enceintes de conservation des lieux de commercialisation (supermarchés, ...) ou de transport (camions, etc..).

L'ensemble 1 comprend au moins :
- un dispositif de mise en contact, comportant un garnissage ;
- un organe d'injection d'un flux aqueux dans le dispositif de mise en contact ;
- un organe de circulation de l'atmosphère du stockage dans le dispositif de mise en contact.

Le dispositif de mise en contact est conformé pour que l'atmosphère soit mise en contact avec le flux aqueux par circulation dans le garnissage.

Le procédé correspondant comprend au moins une étape de mise en contact de l'atmosphère avec un flux aqueux par circulation dans un garnissage.

La mise en contact est effectuée dans tout type de dispositif contenant le garnissage. Par exemple, elle est effectuée dans une tour à garnissage.

On entend ici par garnissage tout type de structure permettant d'obtenir une surface de contact importante entre une phase liquide et une phase gazeuse, et ainsi d'améliorer les échanges entre la phase liquide et la phase gazeuse.

Le garnissage peut ainsi être un garnissage de type vrac ou un garnissage de type structuré.

Dans le cas présent, le garnissage est par exemple du type anneau de Raschig ou anneau de Pall, ou encore est un garnissage structuré en nids d'abeilles.

Il est typiquement réalisé dans une matière plastique.

La mise en contact permet de réaliser des transferts particulièrement efficaces entre le flux de liquide et l'atmosphère du stockage. La grande surface d'échange permet de générer des grandes quantités de vapeur d'eau, à température ambiante, évitant ainsi la condensation.

Notamment, quand le stockage est équipé d'un dispositif de conditionnement d'air, destiné à maintenir la température à l'intérieur du stockage dans une fourchette prédéterminée, il se produit une condensation de la vapeur d'eau contenue dans l'atmosphère notamment au niveau des échangeurs de chaleur ou des condenseurs du dispositif de conditionnement d'air.

La phase aqueuse circulant dans le dispositif de mise en contact est partiellement évaporée, ce qui compense au moins partiellement la vapeur d'eau condensée dans le dispositif de conditionnement d'air.

Comme il sera décrit ci-dessous, ces transferts visent essentiellement à humidifier l'atmosphère à une humidité relative supérieure à 99%, notamment supérieure à 99,5%. Ils peuvent également viser, en outre, différents buts, en fonction de la nature de la phase aqueuse :
- filtration de l'atmosphère, en particulier piégeage de la poussière et des terres en suspension dans l'atmosphère ;
- élimination du CO₂ dégagé par les produits végétaux ;
- élimination de l'éthylène (C₂H₄) dégagé par les produits végétaux ;
- élimination des arômes dégagés par les produits végétaux ;
- réintégration de l'oxygène consommée par les produits végétaux ;
- stérilisation de l'atmosphère ;
- application d'un traitement de protection des produits végétaux.

L'atmosphère du stockage correspond ici au volume des gaz remplissant le stockage et baignant les produits végétaux.

Cette atmosphère comprend typiquement de l'air et la vapeur d'eau, plus les gaz et les produits dégagés par les produits végétaux au cours de leur maturation.

En variante, l'atmosphère est une atmosphère modifiée, par exemple appauvrie en oxygène. Ceci est le cas notamment pour le stockage de certains produits végétaux comme les pommes.

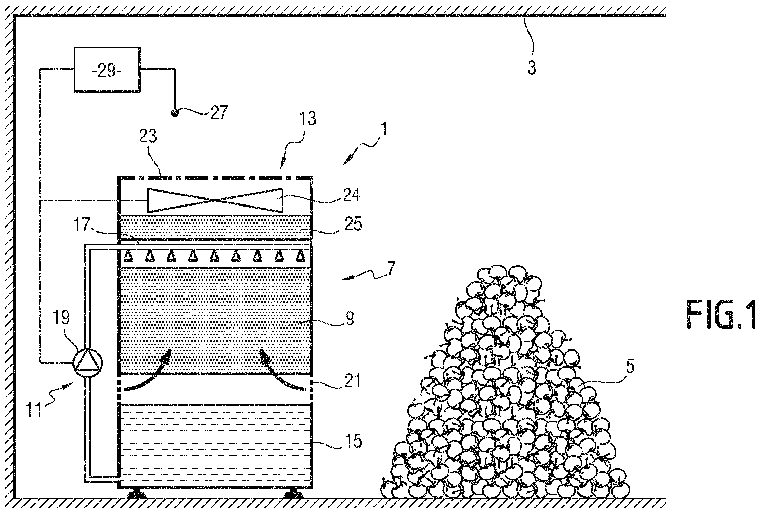

Selon un premier mode de réalisation illustré sur la figure 1, la phase aqueuse utilisée peut comprendre au moins un produit biocide et/ou phytoprotecteur volatile, de température d'ébullition comprise entre 60 et 280°C, le liquide étant évaporé à l'étape de mise en contact à une température inférieure à 50°C.

Quand le produit est un produit biocide, le traitement vise à assainir le stockage. Typiquement, ce traitement est appliqué quand le stockage ne contient pas de produits végétaux.

Quand le produit est un produit phytoprotecteur, qui peut aussi être appelé produit phytosanitaire, le traitement vise à protéger les produits végétaux, en empêchant le développement de maladies et/ou des pourritures, comme notamment les produits fongicides ou antigerminatifs.

Le liquide ne contient que des produits biocides, ou que des produits phytosanitaires, ou encore comprend un ou plusieurs produits biocides mélangés à un ou plusieurs produits phytosanitaires.

Au moins un des produits phytosanitaire est choisi dans la liste suivante : huile essentielle, terpènes, alcool de C3 à C9 saturé ou insaturé, comme par exemple l'isopropanol, l'iso-octanol, le 2-éthylhexanol, les produits de synthèse volatiles, comme par exemple le glutaraldéhyde, l'hexanal, le diméthylnaphtalène et le 3-décène-2-one.

L'huile essentielle est par exemple choisie dans le groupe formé par l'huile de menthe, l'huile de girofle, l'huile de rose, l'huile de thym, l'huile d'origan. En variante, le liquide comprend l'un des constituants de ces huiles, choisi dans l'ensemble formé par le L-carvone, l'eugénol, le géraniol, le thymol, le carvacrol.

Pour une application de désinfection, le produit biocide est un produit volatil, naturel ou de synthèse, ayant des propriétés biocides, tel que l'huile de girofle, l'huile de thym, le geraniol, l'alcool ethylique, le glutaraldéhyde.

Typiquement, la phase aqueuse comprend seulement le ou les produits, sans solvant ni adjuvant. En variante, elle comporte un solvant aqueux ou organique, dans lequel est dissout le ou les produits et un ou plusieurs adjuvants. Le solvant aqueux est par exemple de l'eau. Le solvant organique est par exemple un solvant du type décrit dans FR 2 791 910 ou des glycols, di-glycols et leurs esters relatifs. Les adjuvants sont par exemple des substances aptes à véhiculer la ou les matières actives ou aptes à donner un effet de dilution.

En tout état de cause, la phase aqueuse au cours de l'étape de mise en contact est vaporisée à une température inférieure à 50°C, de préférence inférieure à 20°C, notamment comprise entre -2°C et +12°C, et en particulier entre 0 et 10°C. Par exemple, la phase aqueuse est évaporée à température ambiante.

Comme illustré sur la figure 1, l'ensemble de traitement 1 comprend:
- le dispositif 7 de mise en contact, comportant un garnissage 9 ;
- le dispositif 11 d'injection du flux aqueux dans le dispositif de mise en contact 7 ;
- le dispositif 13 de circulation de l'atmosphère du stockage dans le dispositif de mise en contact 7.

Le dispositif de mise en contact 7 est conformé pour que l'atmosphère soit mise en contact avec le flux aqueux par circulation dans le garnissage 9. Typiquement, le dispositif de mise en contact 7 est une tour à garnissage, qui est d'axe vertical dans l'exemple représenté.

Le dispositif d'injection 11 comporte une réserve 15 de phase aqueuse, et une dose de phase aqueuse stockée dans la réserve 15. La réserve 15 est typiquement un bac, placé verticalement sous le garnissage 9.

Le dispositif d'injection 11 est agencé pour injecter la phase aqueuse au-dessus du garnissage 9.

A cet effet, il comprend typiquement un ou plusieurs organes d'aspersion 17, par exemple des rampes, placés au-dessus du garnissage, et un organe de transfert 19, tel qu'une pompe, aspirant le liquide dans la réserve 15 et refoulant celui-ci dans le ou les organes 17.

Le dispositif de circulation 13 est agencé pour créer une circulation ascendante de l'atmosphère à l'intérieur du dispositif de mise en contact 7.

Pour ce faire, le dispositif de mise en contact 7 comporte une ou plusieurs entrées 21 pour l'atmosphère débouchant à l'intérieur du dispositif de mise en contact 7, sous le garnissage 9.

Chaque entrée 21 communique fluidiquement avec l'intérieur du stockage 3.

Le dispositif de mise en contact présente une sortie 23 pour l'atmosphère chargée en phase aqueuse évaporée, placée en partie supérieure du dispositif de mise en contact, au-dessus des garnissages 9. La sortie 23 est raccordée fluidiquement avec l'intérieur du stockage 3.

Le dispositif de circulation 13 comprend par exemple un organe de circulation 24 tel qu'un ventilateur ou une soufflante, placé au-dessus ou en dessous du garnissage 9, typiquement au sommet du dispositif de mise en contact 7.

L'organe de circulation 24 aspire l'atmosphère chargée en phase aqueuse évaporée au-dessus du garnissage 9, et la refoule dans ou vers la sortie 23.

Le garnissage 9, comme précisé plus haut, est de tout type adapté.

De préférence, le dispositif de mise en contact 1 comporte un séparateur de gouttes 25, placé au-dessus des organes d'aspersion 17, et plus précisément entre les organes d'aspersion 17 et l'organe de circulation 24.

Dans un exemple de réalisation, le dispositif de mise en contact 7 présente une section horizontale carrée, sensiblement constante, de 700x700 mm. La réserve 15 présente la même section horizontale, et présente une hauteur comprise entre 500 et 700 mm. Le dispositif présente quatre entrées 21, chacune disposée sur un des côtés. Le garnissage 9 présente une hauteur d'environ 1 m. Le garnissage est placé par exemple 700 mm au-dessous de l'arrivée de la phase aqueuse, le séparateur de gouttes 25 étant placé 300 mm au-dessus de l'arrivée de la phase aqueuse.

L'ensemble de traitement 1 comporte de préférence un capteur 27 de mesure de la concentration du produit biocide et/ou phytoprotecteur volatile dans l'atmosphère et un dispositif électronique 29 renseigné par le capteur 27.

Le dispositif électronique 29 est programmé pour piloter le dispositif d'injection 11 et/ou l'organe de circulation 13.

Plus précisément, il est notamment programmé pour régler le débit du flux aqueux en fonction de la concentration mesurée par le capteur 27. De préférence, il pilote également l'organe de circulation 24.

Le dispositif électronique 29 est par exemple un calculateur ou une partie de calculateur. En variante, le dispositif électronique de pilotage 29 est réalisé sous forme de composants logiques programmables (FPGA, Field Programmable Gate Array) ou sous forme d'un circuit intégré dédié (ASIC, Application Spécifie Integrated Circuit). Le dispositif électronique 29 est programmé pour mettre en oeuvre une stratégie de traitement.

La stratégie de traitement peut être de tout type. Le traitement peut s'étaler sur une longue durée, de manière à injecter la phase aqueuse par petite quantité, progressivement, de manière à maintenir l'humidité relative désirée à l'intérieur du stockage constamment du niveau désiré.

Inversement, il est possible de réaliser un traitement visant à obtenir rapidement la concentration de saturation d'eau dans l'atmosphère, sur une période courte. Ceci permet par exemple d'humidifier le stockage vide ou partiellement vide.

Cet effet peut être obtenu du fait que la surface de contact entre la phase aqueuse et l'atmosphère est élevée, du fait de la présence des garnissages. La machine vendue sous le nom de XEDAVAP^{®}, dont le principe est d'injecter la phase aqueuse à évaporer sur une toile balayée par un courant d'air, a une surface de toile développée maximum d'environ 4 m². Ceci permet d'évaporer par exemple 5 litres d'eau/jour.

Au contraire, l'ensemble de traitement de la présente invention offre une surface de contact entre le gaz et la phase aqueuse qui peut aller par exemple jusqu'à 70 m². On peut ainsi évaporer des quantités d'eau beaucoup plus importantes, par exemple environ 70 litres d'eau par jour pour un volume d'eau de 1000 litres et 1000 tonnes de produits stockés. Il est donc ainsi possible d'atteindre plus rapidement la concentration de saturation de l'eau dans l'atmosphère.

Le fonctionnement de l'ensemble est le suivant.

La phase aqueuse à évaporer est disposée dans la réserve 15. L'organe de transfert 19 refoule la phase aqueuse dans le ou les organes d'aspersion 17, qui projettent la phase aqueuse vers le garnissage 9. L'organe 24 de mise en circulation de l'atmosphère crée un flux gazeux ascendant. L'atmosphère pénètre dans le dispositif 7 par les entrées 21, circule vers le haut à travers le garnissage 9. La phase aqueuse circule quant à elle vers le bas à travers le garnissage 9, une partie de la phase aqueuse étant évaporée au contact du flux gazeux et étant entraînée avec l'atmosphère sous forme de vapeur. La fraction de la phase aqueuse qui n'est pas évaporée retombe dans la réserve 15. Elle est recyclée. L'atmosphère chargée en eau évaporée passe à travers le séparateur de gouttes 25 et est refoulée par l'organe de circulation 24 jusqu'à la sortie 23.

L'ensemble 1 est typiquement placé à l'intérieur du stockage. Il aspire ainsi par la ou les entrées 21 directement l'atmosphère du stockage, et rejette cette atmosphère chargée en vapeur d'eau directement dans le stockage, par la sortie 23.

Le débit de phase aqueuse est par exemple de 3 m³/heure, et le débit de l'atmosphère d'environ 2000 m³/heure.

Le procédé de traitement selon le premier mode de réalisation comprend une étape de mise en contact de l'atmosphère du stockage 3 avec au moins un flux aqueux par circulation dans un autre garnissage, la phase aqueuse comprenant au moins un produit biocide et/ou phytoprotecteur volatile, de température d'ébullition comprise entre 60 et 280°C, la phase aqueuse étant évaporée à l'autre étape de mise en contact à une température inférieure à 50°C.

Typiquement, le procédé comprend une étape de mesure de la concentration du produit biocide et/ou phytoprotecteur volatile dans l'atmosphère, le débit du flux aqueux à l'étape de mise en contact étant ajusté en fonction de la concentration mesurée.

De préférence, la phase aqueuse injectée est collectée sous le garnissage, dans une réserve, et recyclée à l'étape de mise en contact.

Le procédé est mis en oeuvre par l'ensemble de traitement 1 décrit ci-dessus. Inversement, l'ensemble de traitement 1 décrit ci-dessus est particulièrement adapté pour la mise en oeuvre du procédé.

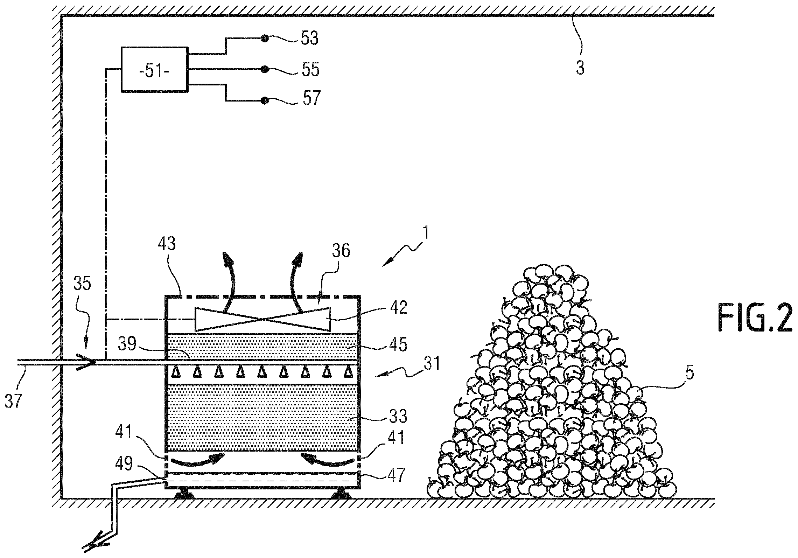

Un second mode de réalisation de l'invention va maintenant être décrit, en référence à la figure 2. Seuls les points par lesquels ce second mode de réalisation diffère du premier seront détaillés ci-dessous.

Dans le second mode de réalisation, la mise en contact vise, en plus de l'humidification de l'atmosphère, à éliminer les poussières et les arômes de l'atmosphère. Les arômes sont dégagés par les produits végétaux pendant leur maturation.

L'ensemble 1 comprend comme dans le premier mode de réalisation :
- un dispositif 31 de mise en contact, comportant un garnissage 33 ;
- un dispositif 35 d'injection du flux aqueux dans le dispositif de mise en contact 31 ;
- un dispositif 36 de circulation de l'atmosphère dans le dispositif de mise en contact 31.

Le dispositif d'injection 35 comporte une arrivée d'eau 37, alimentant un ou plusieurs organes d'aspersion 39 tels que des rampes. L'arrivée d'eau 35 est typiquement raccordée à un réseau de distribution d'eau, ou à un réservoir d'eau. L'eau est typiquement de l'eau pure, ne comportant pas d'additif. L'eau est à une température inférieure à 50°C, typiquement à température ambiante.

Le dispositif de circulation 36 est agencé pour créer une circulation ascendante de l'atmosphère à l'intérieur du dispositif de mise en contact 31.

Pour ce faire, le dispositif de mise en contact 31 comporte une ou plusieurs entrées 41 pour l'atmosphère débouchant à l'intérieur du dispositif de mise en contact 31, sous le garnissage 33. Le dispositif de circulation 36 comporte un organe de circulation 42 est par exemple un ventilateur ou une soufflante, placé(e) au-dessus du garnissage 33, refoulant l'atmosphère dans une sortie 43 communiquant fluidiquement avec l'intérieur du stockage. Un séparateur de gouttes 45 est interposé verticalement entre le ou les organes d'aspersion 39 et l'organe de circulation 42.

Le dispositif de mise en contact 35 comporte par ailleurs un bac 47 placé sous le garnissage 33, et prévu pour collecter l'eau qui n'est pas évaporée au contact de l'atmosphère dans le garnissage 33. Le bac de collecte 47 présente une sortie 49 raccordée typiquement à un égout.

Ainsi, l'eau usée contenant les produits indésirables, c'est-à-dire au moins les poussières et les arômes, est déchargée du dispositif de mise en contact 7 vers les égouts. Elle n'est pas recyclée.

En variante, l'eau est recyclée après avoir été purifiée.

Comme dans le premier mode de réalisation, un dispositif électronique 51 pilote l'organe de circulation 42 et le dispositif d'injection 35.

Typiquement, l'ensemble de traitement est mis en fonctionnement périodiquement, par exemple une fois par jour, de manière à assainir l'atmosphère du stockage.

Le débit d'eau est typiquement compris entre 300 et 500 litres/heure, le débit de l'atmosphère à travers le garnissage étant de l'ordre de 2000 m³/heure.

Il est à noter que dispositif et le procédé selon le second mode de réalisation, outre l'humidification, le piégeage de la poussière et l'élimination des arômes, permettent le cas échéant, d'enrichir l'atmosphère en oxygène.

Les produits végétaux stockés dans le stockage consomment l'oxygène de l'atmosphère par leur respiration naturelle. Il est donc nécessaire de réenrichir régulièrement l'atmosphère en oxygène. Dans le cas présent, en particulier dans le second mode de réalisation, l'eau alimentant le dispositif de mise en contact contient de l'oxygène dissous, qui est partiellement vaporisée lors de la mise en contact avec l'atmosphère.

De préférence, l'ensemble 1 comporte un capteur 53 de mesure de la température à l'intérieur du stockage 3. Le dispositif électronique 51 est configuré pour régler le débit du flux de liquide et/ou le débit de l'atmosphère au moins en fonction de la température mesurée.

Avantageusement, l'ensemble 1 comporte un capteur 55, configuré pour analyser la concentration en O₂ dans l'atmosphère du stockage, typiquement un analyseur de gaz. Le dispositif électronique 51 est configuré pour régler le débit du flux de liquide au moins en fonction de la concentration mesurée.

Par exemple, l'ensemble 1 comporte un hygromètre 57, agencé pour mesurer l'humidité de l'atmosphère dans la chambre 3. Le dispositif électronique 51 est programmé pour régler le débit de l'atmosphère et/ou le débit du flux de liquide au moins en fonction de l'humidité mesurée par l'hygromètre 57.

Selon une variante du second mode de réalisation, la phase aqueuse mise en contact avec l'atmosphère du stockage contient au moins un additif, le dispositif de mise en contact étant configuré pour éliminer le CO₂ et/ou l'éthylène de l'atmosphère du stockage.

Ainsi, la phase aqueuse comprend de l'eau plus un additif dissout dans l'eau. Pour éliminer le CO₂, l'additif est par exemple de la soude (NaOH), de la potasse (KOH), de la chaux vive ou éteinte (CaO, Ca(OH)₂).

Pour éliminer l'éthylène, l'additif contient un oxydant fort, par exemple du permanganate (MnO4⁻) ou du bichromate (Cr₂O₇²⁻) de sodium ou de potassium. Typiquement, l'additif contient du permanganate de sodium ou du permanganate de potassium ou du bichromate de potassium.

La phase aqueuse peut contenir seulement un additif destiné à éliminer le CO₂, ou seulement un additif destiné à éliminer l'éthylène, ou contenir un additif pour éliminer le CO₂ et un additif pour éliminer l'éthylène.

La concentration des différents additifs est choisie en fonction de la quantité de CO₂ et de la quantité d'éthylène à éliminer.

Par exemple, la phase aqueuse est une solution aqueuse de permanganate de sodium ou de permanganate de potassium, saturée en permanganate.

Comme précisé plus haut, le CO₂ et l'éthylène sont dégagés par les produits végétaux lors de leur maturation.

Ainsi, dans la variante du second mode de réalisation de l'invention, le dispositif et le procédé permettent d'éliminer les poussières, les arômes, le CO₂ et/ou l'éthylène de l'atmosphère, en plus d'humidifier l'atmosphère et réenrichir l'atmosphère en eau en O₂.

Dans ce cas, le capteur 55 est de préférence configuré pour analyser la ou les concentrations en CO₂ et/ou en éthylène dans l'atmosphère du stockage. Le dispositif électronique 51 est configuré pour régler le débit du flux aqueux en fonction de la ou les concentrations mesurées.

Le procédé de traitement de l'atmosphère du stockage selon le second mode de réalisation comprend ainsi une étape de mise en contact de l'atmosphère avec un flux aqueux par circulation dans un garnissage.

Typiquement, le procédé comprend une étape de mesure de la ou les concentrations de O₂ et/ou de CO₂ et/ou en éthylène dans l'atmosphère, et/ou de mesure de la température de l'atmosphère, et/ou de mesure de l'humidité dans l'atmosphère du stockage, le débit du flux aqueux et/ou le débit de l'atmosphère à l'étape de mise en contact étant ajustés en fonction de la ou des mesures.

Le procédé est prévu pour être mis en oeuvre par l'ensemble de traitement 1 décrit ci-dessus. Inversement, l'ensemble de traitement 1 décrit ci-dessus est particulièrement adapté pour la mise en oeuvre du procédé.

Il est important de noter également que, dans tous les modes de réalisation, le système s'autorégule. L'eau permettant d'humidifier l'atmosphère étant vaporisée à température ambiante, inférieure à 50°C, s'évapore jusqu'à atteindre la saturation de l'atmosphère sans risque de sursaturation (ce qui est le cas quand on chauffe). Cela permet d'éviter que l'eau recondense après injection. Ceci est vrai également pour l'évaporation du produit biocide et/ou phytoprotecteur.

Ainsi, en plus ou à la place de la régulation par mesure de l'humidité dans l'atmosphère, il est envisagé de laisser le système s'autoréguler. Le système fonctionne par exemple en permanence. L'eau à température ambiante s'évapore jusqu'à atteindre la saturation. Une fois la saturation atteinte, il n'y a plus d'évaporation.

Les exemples suivants sont donnés à titre illustratif et non limitatif de la présente invention.

### Exemple 1 :

1000 tonnes de pommes de terre ont été conservées dans une chambre d'environ 3000 m³, soit environ 2000 m³ d'espace disponible. Tout d'abord, une machine d'évaporation de l'huile de menthe à sec (Xeda VAP 1) a été utilisée avec une dose de 2 g/t/j. Ainsi, cette machine a été mise en route avec un taux d'humidité relative de 85%, une température de stockage de 8°C et un taux de CO₂ maintenu à 1500-1700 ppm par l'ouverture des portes de la chambre (environ 1 h/j). Puis, la machine Xeda VAP 1 a été remplacée par la machine illustrée à la figure 1, avec un flux d'eau de 1300 kg/h, une réserve d'eau de 1000 l, et un flux d'air de 4500 m³/h. Une dose similaire d'huile de menthe, mélangée à la phase aqueuse a été évaporée. Afin de neutraliser le CO₂ formé, on ajoute 50kg de soude caustique à la réserve d'eau (1000 I). La concentration de CO2 est alors immédiatement tombée à 700-870 ppm, avec les portes fermées continuellement. Environ 1 mois plus tard la solution aqueuse était encore alcaline (pH 9,5) : la totalité de la soude n'avait donc pas été transformée en bicarbonate de soude. Néanmoins, les pommes de terre étaient parfaitement conservées, sans pourriture ni germination.

Si toute la soude avait été transformée en bicarbonate, 55 kg de CO₂ auraient dû être absorbés. Puisque la transformation de la soude en bicarbonate a été incomplète après 35 jours, il peut être considéré que 55 kg de CO₂ peuvent être absorbés en 40 jours, correspondant donc à la production de CO₂ par les 1000 t de pommes de terre dans cette période. Ceci donne donc une valeur de 55 kg de CO₂ pour 40 jours, soit 1,38 kg/j de CO₂. Cette valeur est à comparer aux 100 kg/j de CO₂, qui auraient dû être produits, selon les données disponibles dans la littérature.

Ces résultats signifient que 70 fois moins de CO₂ ont été produits qu'attendus théoriquement. A titre illustratif, la concentration dans la chambre est d'environ 110 ppm (comparé à la concentration de 597 ppm à l'extérieur de la chambre).

La réaction de respiration en présence est la suivante : sucre + O₂ → CO₂ + H₂O.

Cette réaction donne donc la variation suivante de l'inhibition du métabolisme, rapportée à une valeur de référence 1 à 95% d'humidité relative : 5 à 99% d'humidité relative, 10 à 99,5% d'humidité relative, 50 à 99,9% d'humidité relative, 100 à 99,95% d'humidité relative et 500 à 99,99% d'humidité relative.

Une inhibition de production de CO₂ d'environ 100 correspond donc à 99,95% d'humidité relative.

## Revendications

1. Procédé de conservation de produits végétaux, comprenant le stockage dans une enceinte fermée desdits produits dans une atmosphère dont l'humidité relative (HR) est égale ou supérieure à 99%, et mettant en oeuvre un ensemble de traitement de l'atmosphère, ledit ensemble comprenant
- un dispositif de mise en contact de l'atmosphère avec un flux aqueux à température ambiante, comportant un garnissage;
- un dispositif d'injection d'un flux aqueux dans le dispositif de mise en contact ;
- un dispositif de circulation de l'atmosphère du stockage dans le dispositif de mise en contact ;
le dispositif de mise en contact étant conformé pour que l'atmosphère soit mise en contact avec le flux aqueux par circulation dans ledit garnissage, et en ce que l'atmosphère présente un taux d'humidité relative supérieur à 99% ; et
ledit procédé comprenant :
- une étape de collecte du flux aqueux issu de l'étape de mise en contact ;
- une étape de régénération du flux aqueux issu de l'étape de mise en contact, au cours de laquelle ledit flux aqueux est mis en contact avec un flux d'air extérieur au stockage par circulation dans un garnissage extérieur, le flux aqueux étant ensuite réutilisé à l'étape de mise en contact ;
- une étape de mesure de la concentration en CO₂ et/ou O₂, dans l'atmosphère du stockage, et/ou de la température de l'atmosphère du stockage, un débit du flux aqueux à l'étape de mise en contact et/ou du flux d'air extérieur à l'étape de régénération étant réglé au moins en fonction dudit paramètre mesuré
**caractérisé en ce que** l'atmosphère est humidifiée par de la vapeur d'eau à température ambiante jusqu'à saturation de l'air.

2. Procédé selon la revendication 1, tel que le procédé comprend au moins une étape de mise en contact de l'atmosphère avec un flux aqueux par circulation dans un garnissage, choisi parmi les garnissages de type vrac ou structuré, tels que les anneaux de Raschig, de Pall ou les garnissages en nid d'abeille.

3. Procédé selon la revendication 1 ou 2 tel que l'HR de l'atmosphère du stockage est supérieure à 99,5%.

4. Procédé selon l'une quelconque des revendications précédentes tel que la conservation est réalisée par ralentissement du développement physiologique des produits végétaux, inhibant ainsi les phénomènes associés au vieillissement tels que l'échaudure, la germination, la perte de poids.

5. Procédé selon la revendication 4, tel que le ralentissement physiologique de l'évolution rapporté à une valeur de référence 1 à 95% d'humidité relative de l'atmosphère du stockage, varie de la manière suivante :
5 à 99% d'humidité relative, 10 à 99,5% d'HR, 50 à 99,9% d'HR, 100 à 99,95% d'HR, 500 à 99,99% d'HR.

6. Procédé selon l'une quelconque des revendications précédentes tel que la température de stockage des produits végétaux est comprise entre -1 et 20°C.

7. Procédé selon l'une quelconque des revendications 2 à 6 tel que la température de la phase aqueuse ou de flux aqueux est comprise entre 0 et 20°C.

8. Procédé selon l'une quelconque des revendications précédentes tel que lesdits produits végétaux sont choisis parmi les fruits, légumes, bulbes et tubercules, fleurs, graines, semis.

9. Procédé selon l'une quelconque des revendications précédentes tel que le procédé comprend en outre l'évaporation d'un produit biocide et/ou phytoprotecteur.

10. Procédé selon la revendication 9 tel que ledit agent biocide et/ou phytoprotecteur est choisi parmi l'huile de girofle et l'huile de menthe.

11. Procédé selon l'une quelconque des revendications 2 à 10 tel que le flux aqueux comprend en outre un agent de neutralisation du CO₂, de neutralisation des arômes et/ou de neutralisation de l'éthylène de l'atmosphère.

12. Procédé selon la revendication 11 tel que ledit agent de neutralisation du CO₂ est l'hydroxyde de sodium ou de potassium.

13. Procédé selon la revendication 11 tel que ledit agent de neutralisation des arômes et/ou de neutralisation de l'éthylène est le permanganate ou bichromate, de sodium ou de potassium.

14. Procédé selon l'une quelconque des revendications 2 à 13, tel que le procédé comprend une étape de mesure de l'humidité dans l'atmosphère du stockage, un débit de l'atmosphère à l'étape de mise en contact étant réglé au moins en fonction de ladite humidité mesurée.

## Patentansprüche

1. Verfahren zur Konservierung von pflanzlichen Produkten, das die Lagerung der Produkte in einem geschlossenen Raum in einer Atmosphäre mit einer relativen Luftfeuchtigkeit (RF) von 99% oder mehr umfasst und eine Einheit zur Behandlung der Atmosphäre einsetzt, wobei die Einheit Folgendes umfasst
- eine Vorrichtung zum Inkontaktbringen der Atmosphäre mit einem wässrigen Strom bei Raumtemperatur, die eine Packung umfasst;
- eine Vorrichtung zum Einspritzen eines wässrigen Stroms in die Kontaktvorrichtung;
- eine Vorrichtung zur Zirkulation der Lagerungsatmosphäre in der Kontaktvorrichtung;
wobei die Kontaktvorrichtung so ausgelegt ist, dass die Atmosphäre durch Zirkulation in der Packung mit dem wässrigen Strom in Kontakt gebracht wird, und dass die Atmosphäre einen relativen Feuchtigkeitsgehalt von mehr als 99% aufweist; und
das Verfahren Folgendes umfasst:
- einen Schritt des Sammelns des wässrigen Stroms der sich aus dem Schritt des Kontaktierens ergibt;
- einen Schritt des Regenerierens des wässrigen Stroms der sich aus dem Schritt des Kontaktierens ergibt, in dessen Verlauf der wässrige Strom durch Zirkulation in einer äußeren Packung mit einem Luftstrom außerhalb des Lagerungsbereichs in Kontakt gebracht wird, wobei der wässrige Strom anschließend wieder im Schritt des Kontaktierens verwendet wird;
- einen Schritt zum Messen der CO2- und/oder O2-Konzentration in der Lagerungsatmosphäre und/oder der Temperatur der Lagerungsatmosphäre, wobei eine Durchflussrate des wässrigen Stroms beim Kontaktieren und/oder des Außenluftstroms beim Regenerieren, der zumindest in Abhängigkeit von dem gemessenen Parameter geregelt wird.
**dadurch gekennzeichnet, dass** die Atmosphäre mit Wasserdampf bei Raumtemperatur bis zur Sättigung der Luft befeuchtet wird.

2. Verfahren nach Anspruch 1, derart, dass das Verfahren mindestens einen Schritt umfasst, bei dem die Atmosphäre mit einem wässrigen Strom in Kontakt gebracht wird, indem sie in einer Packung zirkuliert, die aus Packungen des Typs lose oder strukturiert ausgewählt wird, wie Raschig-Ringe, Pall-Ringe oder Wabenpackungen.

3. Verfahren nach Anspruch 1 oder 2, so dass die RF der Lagerungsatmosphäre größer als 99,5% ist.

4. Verfahren nach einem der vorhergehenden Ansprüche, so dass die Konservierung durch Verlangsamung der physiologischen Entwicklung der pflanzlichen Produkte erreicht wird, wodurch die mit dem Altern verbundenen Phänomene wie Schalenbräune, Keimen und Gewichtsverlust gehemmt werden.

5. Verfahren nach Anspruch 4, so dass die physiologische Verlangsamung der Entwicklung, bezogen auf einen Referenzwert 1 bei 95% relativer Luftfeuchtigkeit der Lagerungsatmosphäre, wie folgt variiert:
5 bei 99% relative Luftfeuchtigkeit, 10 bei 99,5% RF, 50 bei 99,9% RF, 100 bei 99,95% RF, 500 bei 99,99% RF.

6. Verfahren nach einem der vorhergehenden Ansprüche, derart, dass die Lagerungstemperatur der pflanzlichen Produkte zwischen -1 und 20 °C liegt.

7. Verfahren nach einem der Ansprüche 2 bis 6, derart, dass die Temperatur der wässrigen Phase oder des wässrigen Stroms zwischen 0 und 20 °C liegt.

8. Verfahren nach einem der vorhergehenden Ansprüche, derart, dass die pflanzlichen Produkte aus Obst, Gemüse, Zwiebeln und Knollen, Blumen, Samen und Setzlingen ausgewählt werden.

9. Verfahren nach einem der vorherigen Ansprüche, wobei das Verfahren außerdem das Versprühen eines Biozids und/oder eines Safeners umfasst:

10. Verfahren nach Anspruch 9, wobei das Biozid und/oder der Safener aus Nelkenöl und Pfefferminzöl ausgewählt wird.

11. Verfahren nach einem der Ansprüche 2 bis 10, derart, dass der wässrige Strom zusätzlich ein Mittel zur Neutralisierung von CO2, zur Neutralisierung von Aromastoffen und/oder zur Neutralisierung von Ethylen aus der Atmosphäre umfasst.

12. Verfahren nach Anspruch 11, derart, dass das CO2-Neutralisationsmittel Natrium- oder Kaliumhydroxid ist.

13. Verfahren nach Anspruch 11, bei dem das Mittel zur Neutralisierung von Aromen und/oder zur Neutralisierung von Ethylen Natrium- oder Kaliumpermanganat oder - dichromat ist.

14. Verfahren nach einem der Ansprüche 2 bis 13, so dass das Verfahren einen Schritt des Messens der Feuchtigkeit in der Lagerungsatmosphäre umfasst, wobei eine Durchflussrate der Atmosphäre beim Schritt des Kontaktierens zumindest in Abhängigkeit von der gemessenen Feuchtigkeit eingestellt wird.

## Claims

1. Method for preserving plant products, comprising the storage in a closed chamber of the products in an atmosphere whose relative humidity (RH) is equal to or greater than 99%, and implementing a set to treat the atmosphere, wherein the set comprises:
- a device for bringing the atmosphere into contact with an aqueous stream, comprising a packing;
- a device for injecting an aqueous stream into the contacting device;
- a device for circulating the storage atmosphere in the contacting device;
wherein the contacting device is so shaped that the atmosphere is brought into contact with the aqueous stream by circulation in the packing, and in that the atmosphere has a relative humidity greater than 99%; and
wherein the method comprises:
- a step of collecting the aqueous stream resulting from the contacting step;
- a step of regeneration of the aqueous stream resulting from the contacting step, during which the aqueous stream is brought into contact with a flow of air outside the circulation storage in an external packing, wherein the aqueous stream is then reused in the contacting step;
- a step of measuring the concentration of CO₂ and/or O₂ in the storage atmosphere and/or the temperature of the storage atmosphere, wherein the flow rate of the aqueous stream at the contacting step and/or of the air flow outside the regeneration step is set at least according to the measured parameter;
**Characterized in that** the atmosphere is moistened with water vapor at room temperature until saturation of air.

2. Method according to claim 1, such that the method comprises at least one step of bringing the atmosphere into contact with an aqueous stream by circulation in a packing, chosen from loose or structured packing, such as Raschig or Pall rings or honeycomb packings.

3. Method according to claim 1 or 2 such that the RH of the storage atmosphere is greater than 99.5%.

4. Method according to any one of the preceding claims, such that the preservation is carried out by slowing down the physiological development of the plant products, thus inhibiting the phenomena associated with aging such as scalding, germination, weight loss.

5. Method according to claim 4, such that the physiological slowdown of the evolution relative to a reference value 1 at 95% relative humidity of the storage atmosphere, varies as follows:
5 at 99% RH, 10 at 99.5% RH, 50 at 99.9% RH, 100 at 99.95% RH, 500 at 99.99% RH.

6. Method according to any one of the preceding claims, such that the storage temperature of the plant products is between -1 and 20°C.

7. Method according to any one of the claims 2 to 6, such that the temperature of the aqueous phase or aqueous stream is between 0 and 20°C.

8. Method according to any one of the preceding claims, such that the plant products are chosen from fruits, vegetables, bulbs and tubers, flowers, seeds, seedlings.

9. Method according to any one of the preceding claims, such that the method further comprises the evaporation of a biocidal and/or safener product.

10. Method according to claim 9 wherein the biocidal agent and/or safener product is selected from clove oil and mint oil.

11. Method according to any one of the claims 2 to 10 such that the aqueous stream further comprises an agent for neutralization of CO₂, neutralization of aromas and/or neutralization of ethylene in the atmosphere.

12. Method according to claim 11 wherein the agent neutralizing CO₂ is sodium or potassium hydroxide.

13. Method according to claim 11 wherein the agent for neutralization of aromas and/or ethylene is permanganate or dichromate, sodium or potassium.

14. Method according to any one of the claims 2 to 13, such that the method comprises a step of measuring the humidity in the storage atmosphere, wherein the flow rate of the atmosphere at the contacting step is set at least according to the measured humidity.
